# EUROPEAN PATENT APPLICATION

(11) **EP 4 575 865 A1**
(43) Date of publication of application: **25.06.2025**
(21) Application number: 24214761.9
(22) Date of filing: 22.11.2024
(51) Int. Cl.: G06F 21/62, H04L 9/32

(54) **A CONCEPT FOR AN ATTESTATION RECOMMENDATION SERVICE**

(30) Priority: 22.12.2023 US 202318393676
(71) Applicant: INTEL Corporation, Santa Clara, CA 95054 (US)
(72) Inventor: SMITH, Ned M., Beaverton, 97006 (US); ELSAID, Mostafa, 76139 Karlsruhe (DE)
(74) Representative: 2SPL Patentanwälte PartG mbB

(57) **Abstract**

Various examples relate to a concept for an attestation recommendation service. An apparatus comprises interface circuitry, machine-readable instructions, and processor circuitry to execute the machine-readable instructions to provide an attestation recommendation service, by obtaining, from a requester, information on a first proposed set of attributes to be used for attestation of the requester by an attestation verification service, determining, based on the information on the first proposed set of attributes and based on a desired privacy score of the requester, a second proposed set of attributes to be used for the attestation, and providing information to the requester, the information comprising the second proposed set of attributes.

## Description

### Background

Attestation services may harvest a variety of attributes about a device that, taken together, are privacy revealing and subject to collusion with other telemetry data. Attestation has beneficial security properties for the relying party, but also enables the relying party to become a privacy adversary. An attestation service that applies differential privacy analysis (DPA), or colludes with a DPA partner, can create AI models tailored to specific users or devices that could be used for ad tracking or other purposes counter to privacy objectives and can utilize the aggregated attestation data and their attributes for the purpose of training a model. This may enable privacy revealing classification and characterization flows that could be abused for commercial and offensive purposes.

Existing techniques focus on limiting collusion among online Verifiers or Relying Parties by obfuscating the cryptographic keys used to attest evidence, such as one-time use keys, group signing schemes, e.g., Direct Anonymous Attestation, DAA. Other techniques involve creation of a third party that is trusted by both the Attester entity and the Relying Party entities where the Attester trusts the 3rd party to not disclose privacy sensitive attributes while also revealing vouching for the integrity of the Attester. An example for such improvement is "Privacy CA" by the Trusted Computing Group. However, the attestation attributes themselves (not just the keys) can be privacy sensitive values that can be correlated. Privacy inter-mediaries are subject to conflict-of-interest scenarios where they can be swayed to favor the interests of either the Attester or the Relying Party, depending on which offers a more substantial incentive.

### Brief description of the Figures

Some examples of apparatuses and/or methods will be described in the following by way of example only, and with reference to the accompanying figures, in which:
- Fig. 1a: shows a schematic diagram of an example of an apparatus or device for providing an attestation recommendation service, and of a computer system comprising such an apparatus or device;
- Fig. 1b: shows a flow chart of an example of a method for providing an attestation recommendation service;
- Fig. 2a: shows a schematic diagram of an example of an apparatus or device for a requester, and of a requester device comprising such an apparatus or device;
- Fig. 2b: shows a flow chart of an example of a method for a requester;
- Fig. 3: shows a schematic diagram of a Privacy Protected Trust as a Service architecture; and
- Fig. 4: shows a flow chart of an example flow of an Attestation Recommender.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

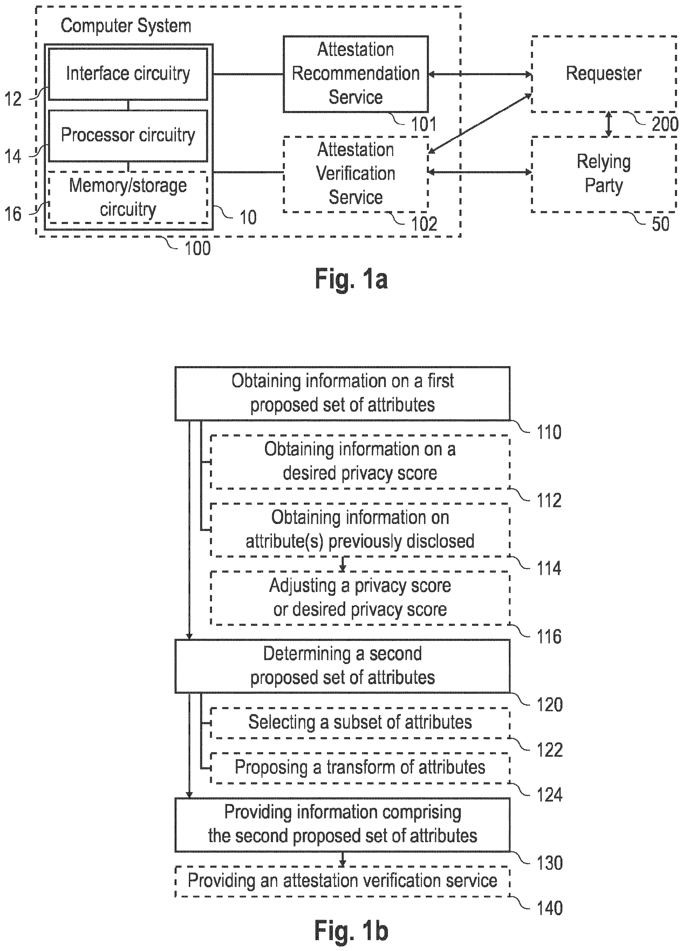

Fig. 1a shows a schematic diagram of an example of an apparatus 10 or device 10 for providing an attestation recommendation service, and of a computer system comprising such an apparatus or device. The apparatus 10 comprises circuitry to provide the functionality of the apparatus 10. For example, the circuitry of the apparatus 10 may be configured to provide the functionality of the apparatus 10. For example, the apparatus 10 of Fig. 1a comprises interface circuitry 12, processor circuitry 14, and (optional) memory/storage circuitry 16. For example, the processor circuitry 14 may be coupled with the interface circuitry 12 and/or with the memory/storage circuitry 16. For example, the processor circuitry 14 may provide the functionality of the apparatus, in conjunction with the interface circuitry 12 (for communicating with other entities inside or outside the computer system 100, e.g., with a requester device 200 and/or with a relying party 50), and the memory/storage circuitry 16 (for storing information, such as machine-readable instructions). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1a comprises means for processing 14, which may correspond to or be implemented by the processor circuitry 14, means for communicating 12, which may correspond to or be implemented by the interface circuitry 12, (optional) means for storing information 16, which may correspond to or be implemented by the memory or storage circuitry 16. In general, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions, e.g., within the memory or storage circuitry 16 or means for storing information 16.

The processor circuitry 14 or means for processing 14 is to provide an attestation recommendation service 101. Providing the attestation recommendation service comprises obtaining, from a requester 200, information on a first proposed set of attributes to be used for attestation of the requester by an attestation verification service 102. Providing the attestation recommendation service comprises determining, based on the information on the first proposed set of attributes and based on a desired privacy score of the requester, a second proposed set of attributes to be used for the attestation. Providing the attestation recommendation service comprises providing information to the requester 200, the information comprising the second proposed set of attributes.

Fig. 1b shows a flow chart of an example of a corresponding method for providing an attestation recommendation service. For example, the method may be performed by the computer system, such as the computer system 100 shown in Fig. 1a, or by the apparatus 10 or device 10 thereof. The method comprises obtaining 110, from the requester 200, the information on the first proposed set of attributes to be used for attestation of the requester by the attestation verification service. The method comprises determining 120, based on the information on the first proposed set of attributes and based on the desired privacy score of the requester, the second proposed set of attributes to be used for the attestation. The method comprises providing 130 the information to the requester 200, the information comprising the second proposed set of attributes.

In the following, the functionality of the apparatus 10, device 10, computer system 100, method and of a corresponding computer program will be introduced more fully with reference to the apparatus 10. Features introduced in connection with the apparatus 10 may likewise be included in the corresponding device 10, computer system 100, method and computer program.

Various examples of the present disclosure are based on the finding, that the privacy impact of attestation services can be mitigated with the help of differential privacy analysis (DPA). Differential privacy is a system for publicly sharing information about a dataset by describing the patterns of groups within the dataset while withholding information about individuals in the dataset. Essentially, it is a mathematical approach that enables organizations to publish data with rigorous privacy guarantees. With the help of DPA, an Attester (denoted requester in connection with Figs. 1a to 2b) can determine, whether the information provided as evidence to an attestation verification service, and thus also to a relying party, are too detrimental to privacy. By evaluating the privacy impact of the evidence being disclosed, e.g., with the help of a privacy budget as defined in DPA, the attester/requester can select which evidence to share for the purpose of attestation while staying within the privacy budget.

In general, the privacy impact of different attributes (and therefore pieces of evidence used for the purpose of attestation) is not immediately apparent. While each device owner could perform research to determine the population size (defining how distinctive the respective attribute/evidence is within the population), this is a tedious and high-effort process. In the proposed concept, this task is taken over by a so-called attestation recommendation service, which is a service for providing a recommendation with respect to which attributes are to be used for attestation (to maintain a desired privacy score, i.e., to stay within the privacy budget). The computer system 100, apparatus 10, device 10, method and computer program provide such an attestation recommendation service 100.

When a requester requests a recommendation, the process starts with obtaining from the requester 200, the information on a first proposed set of attributes to be used for attestation of the requester by the attestation verification service 102. In other words, the requester proposes a set of attributes that could (feasibly) be provided to the attestation verification service 102 for the purpose of attestation. In some cases, the first proposed set of attributes may be the entirety of the attributes available at the requester. Alternatively, the first proposed set of attributes may be attributes proposed by the relying party triggering the attestation. If available, the information on the first proposed set of attributes may include, for at least a subset of the attributes, information on a privacy impact (e.g., population size) of the respective attribute.

As the second proposed set of attributes is determined based on a desired privacy score (e.g., a privacy budget) of the requester, the processor circuitry may obtain information on the desired privacy score of the requester from the requester. In other words, as further shown in Fig. 1b, the method may comprise obtaining 112 the information on the desired privacy score of the requester from the requester. Alternatively, a default desired privacy score may be used, or the desired privacy score may be maintained permanently at the attestation recommendation service 101. For example, the desired privacy score can be obtained using a combination of attributes from the requester and/or recommended attributes from the recommendation service.

In some cases, the relying party (the attestation is performed, via the attestation verification service 102, towards the relying party 50) may have previously interacted with the requester. In such cases, the relying party may already hold some information with respect to the requester. This may be taken into account in the proposed concept, the processor circuitry may obtain (shown also as operation 114 of the method in Fig. 1b) information on one or more attributes that have been previously disclosed to a relying party. The second proposed set of attributes may be determined further based on the information on the one or more attributes that have been previously disclosed to the relying party. For example, an initial privacy score of the requester may be adjusted (representing how much information has been already disclosed towards the relying party), or the desired privacy score may be adjusted (representing how much information can still be disclosed while staying within the privacy budget. In other words, the processor circuitry may adjust a privacy score of the second proposed set of attributes or the desired privacy score based on the information on the one or more attributes that have been previously disclosed to a relying party. Accordingly, as further shown in Fig. 1b, the method may comprise adjusting 116 the privacy score of the second proposed set of attributes or the desired privacy score based on the information on the one or more attributes that have been previously disclosed to a relying party.

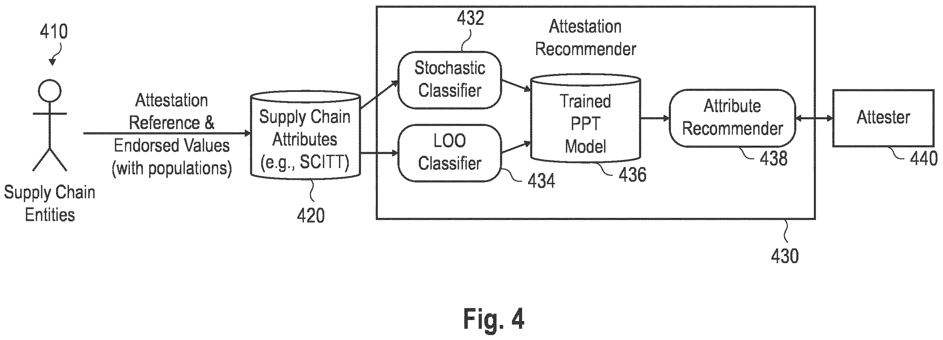

Using the first set of attributes (and ancillary information) received from the requester, the attestation recommendation service now determines the second proposed set of attributes to be used for the attestation. For this purpose, the attestation recommendation service attempts to estimate the privacy impact of the respective attributes being proposed, using information about privacy impact of attributes being used for the purpose of attestation (i.e., attributes that have so-called "trust relevance". For example, the processor circuitry may determine the second proposed set of attributes based on a repository of attributes having trust relevance (shown in Fig. 4 as SCITT database 420), with the repository comprising information on a privacy impact of the attributes having trust relevance. The information privacy impact of these attributes may now be used to estimate the privacy impact of the attributes to be used for attestation. In the example given in connection with Fig. 4, two different mechanisms are proposed - a stochastic classifier, and a leave-one-out (LOO) classifier. For example, the processor circuitry may determine the second proposed set of attributes based on at least one of an output of a stochastic classifier and an output of a LOO classifier, both of which may be trained classifier (i.e., machine-learning models trained for classification or regression). For example, the stochastic classifier is a classifier that is trained on the population information, and thus privacy impact, of different attributes, and is trained to output a stochastic measure of a privacy impact of a given attribute provided at its input. The LOO classifier is used to control for non-stochastic populations. The LOO Classifier may use Shapely values (L. S. Shapley, 17. A Value for n-Person Games. Princeton University Press, 2016, pp. 307-318) to find artifacts that are strong indicators of membership in a class. An iterative approach may select a set of artifacts and train the set leaving one artifact out, for each artifact in the set. Then it may compare results to find the artifacts that are strong vs. weak indicators of membership. Artifacts that are weak indicators are more favorable for use as privacy preserving attestation attributes. The LOO Classifier may thus provide, for an attribute provided at its input, an estimate on whether the attribute is a weak indicator or strong indicator of membership in a class, and therefore another measure of a privacy impact of a given attribute provided at its input. Both the output of the stochastic classifier and of the LOO classifier are based on the repository of attributes having trust relevance, for example. In particular, if the stochastic classifier and the LOO classifier are implemented as trained machine-learning models, the stochastic classifier and/or the LOO classifier may be trained based on the repository of attributes having trust relevance. Both the stochastic classifier and the LOO classifier may take the attributes of the first set of attributes as input.

As shown in Fig. 4, the output of the stochastic classifier 432 and of the LOO classifier 434 may then be combined by another machine-learning model 434 (denoted PPT model 434 in Fig. 4). In other words, the processor circuitry may determine the second proposed set of attributes based on an output of a machine-learning model being trained to output, based on at least one of the output of the stochastic classifier and the output of the LOO classifier, information on an estimated privacy impact of the attributes of the first proposed set of attributes. This machine-learning model may be used to balance the outputs of the stochastic classifier and of the LOO classifier, for example.

Based on the determined privacy impact of the respective attributes, the attestation recommendation service then determines the second proposed set of attributes. This can be done by selecting a subset of the proposed set of attributes. For example, the processor circuitry may select a subset of attributes of the first proposed set of attributes for the second proposed set of attributes when determining the second proposed set of attributes. Accordingly, as further shown in Fig. 1b, the method may comprise selecting 122 the subset of attributes of the first proposed set of attributes for the second proposed set of attributes when determining the second proposed set of attributes.

In some cases, it may be necessary to disclose some measure of information to be accepted by the relying party, but the raw information (e.g., attribute/evidence) available for disclosure may be too privacy-revealing. In such cases, the attestation recommendation service may transform one or more attributes to make them less impactful with respect to privacy. For example, the processor circuitry may propose (shown as proposing 124 a transform in Fig. 1b) an amalgamation, blinding, substitution, cryptographic hash, reduction in resolution, homomorphic encryption, zero-knowledge proof of knowledge proof, or other transform of one or multiple attributes of the first proposed set of attributes for the second proposed set of attributes when determining the second proposed set of attributes such that the respective attribute or attributes of the second proposed set of attributes cannot be linked to the attribute or attributes of the first set of attributes they are based on or other identifying attributes about the requestor device or its operators. To give two examples: In a first example, given an IPv4 (Internet Protocol version 4) address use case, if the Relying Party requests the IP address in attestation evidence, and the IPv4 address is deemed to violate the desired privacy score, the attestation recommendation service may offer an alternative IP address that masks the lower half of the IPv4 address space (e.g., 192.168.0.0 + mask: 255.255.0.0) or may recommend using a different attribute (e.g., IPv6 address + mask). In a second example, the attestation recommendation service may suggest an alternate attribute that is an amalgamation of several attributes where the amalgamated attribute has a population that is the sum of the discrete attributes. This can be achieved by hashing the attributes where the resulting digest is the new attribute. For example, given three attributes (A1, A2, A3), each having a population (A1=50, A2=90, A3=20) respectively. The individual probabilities are (A1=0.02, A2=0.012, A3=0.05). The Attribute Recommender can combine the populations of each attribute to create a new attribute A4. The population of A4 is 90,000 and the probability of collision is 1 in 90,000 or P(A1, A2, A3) = P(A1) * P(A2) * P(A3) = (0.02 * 0.012 * 0.05) = 0.000012. If the attributes (A1, A2, A3) are correlated, the probability equation P(A1) x P(A2|A1), P(A1) x P(A3IA1). The attestation recommendation service may rely on the classifiers for insight as to whether a given attribute is correlated with other attributes.

Once the attestation recommendation service has compiled the second set of attributes, information comprising the second proposed set of attributes is provided to the requester.

In addition to providing the attestation recommendation service, the attestation verification service can also be provided by the apparatus 10, device 10, computer system 100, method and computer program (if it is not provided by a different entity). In other words, the processor circuitry may provide the attestation verification service, by obtaining the second proposed set of attributes from the requester and providing an attestation result to a relying party based on the second proposed set of attributes. Accordingly, as further shown in Fig. 1b, the method may comprise providing 140 the attestation verification service, by obtaining the second proposed set of attributes from the requester and providing the attestation result to a relying party based on the second proposed set of attributes. Provisioning of the attestation verification service can be implemented similar to other systems without an attestation recommendation service.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 16 or means for storing information 16 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data, e.g., by grouping or clustering the input data, finding commonalities in the data. Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input, but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), preferably a plurality of layers of hidden nodes.

Alternatively, the machine-learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

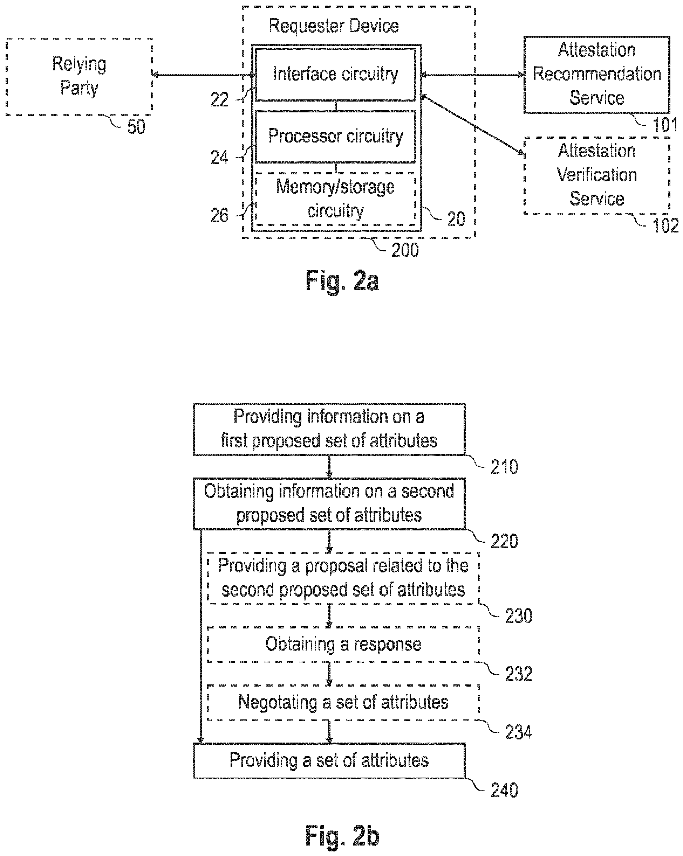

More details and aspects of the apparatus 10, device 10, computer system 100, method and computer program are mentioned in connection with the proposed concept, or one or more examples described above or below (e.g., Fig. 2a to 4). The apparatus 10, device 10, computer system 100, method and computer program may comprise one or more additional optional features corresponding to one or more aspects of the proposed concept, or one or more examples described above or below.

Fig. 2a shows a schematic diagram of an example of an apparatus 20 or device 20 for a requester, and of a requester device 200 (e.g., a computer system, mobile device, Internet of Things device etc.) comprising such an apparatus 20 or device 20. The apparatus 10 comprises circuitry to provide the functionality of the apparatus 10. For example, the circuitry of the apparatus 20 may be configured to provide the functionality of the apparatus 20. For example, the apparatus 20 of Fig. 2a comprises interface circuitry 22, processor circuitry 24, and (optional) memory/storage circuitry 26. For example, the processor circuitry 24 may be coupled with the interface circuitry 22 and/or with the memory/storage circuitry 26. For example, the processor circuitry 24 may provide the functionality of the apparatus, in conjunction with the interface circuitry 22 (for communicating with other entities inside or outside the requester device 200, e.g., with an attestation recommendation service 101, an attestation verification service 102, and/or with a relying party 50), and the memory/storage circuitry 26 (for storing information, such as machine-readable instructions). Likewise, the device 20 may comprise means for providing the functionality of the device 20. For example, the means may be configured to provide the functionality of the device 20. The components of the device 20 are defined as component means, which may correspond to, or implemented by, the respective structural components of the apparatus 20. For example, the device 20 of Fig. 2a comprises means for processing 24, which may correspond to or be implemented by the processor circuitry 24, means for communicating 22, which may correspond to or be implemented by the interface circuitry 22, (optional) means for storing information 26, which may correspond to or be implemented by the memory or storage circuitry 26. In general, the functionality of the processor circuitry 24 or means for processing 24 may be implemented by the processor circuitry 24 or means for processing 24 executing machine-readable instructions. Accordingly, any feature ascribed to the processor circuitry 24 or means for processing 24 may be defined by one or more instructions of a plurality of machine-readable instructions. The apparatus 20 or device 20 may comprise the machine-readable instructions, e.g., within the memory or storage circuitry 26 or means for storing information 26.

The processor circuitry 24 or means for processing 24 is to provide information on a first proposed set of attributes to be used for attestation to an attestation recommendation service 101.

The processor circuitry 24 or means for processing 24 is to obtain information on the second proposed set of attributes from the attestation recommendation service. The processor circuitry 24 or means for processing 24 is to provide the second proposed set of attributes to an attestation verification service 102, to perform attestation towards a relying party.

Fig. 2b shows a flow chart of an example of a corresponding method for a requester, such as the requester device 200 shown in Fig. 2a. For example, the method may be performed by the requester, such as the requester device 200 shown in Fig. 2a, or by the apparatus 20 or device 20 thereof. The method comprises providing 210 the information on the first proposed set of attributes to be used for attestation to the attestation recommendation service 101. The method comprises obtaining 220 the information on the second proposed set of attributes from the attestation recommendation service. The method comprises providing 240 the second proposed set of attributes to an attestation verification service, to perform attestation towards the relying party.

In the following, the functionality of the apparatus 20, device 20, requester device 200, method and of a corresponding computer program will be introduced more fully with reference to the apparatus 20. Features introduced in connection with the apparatus 20 may likewise be included in the corresponding device 20, requester device 200, method and computer program.

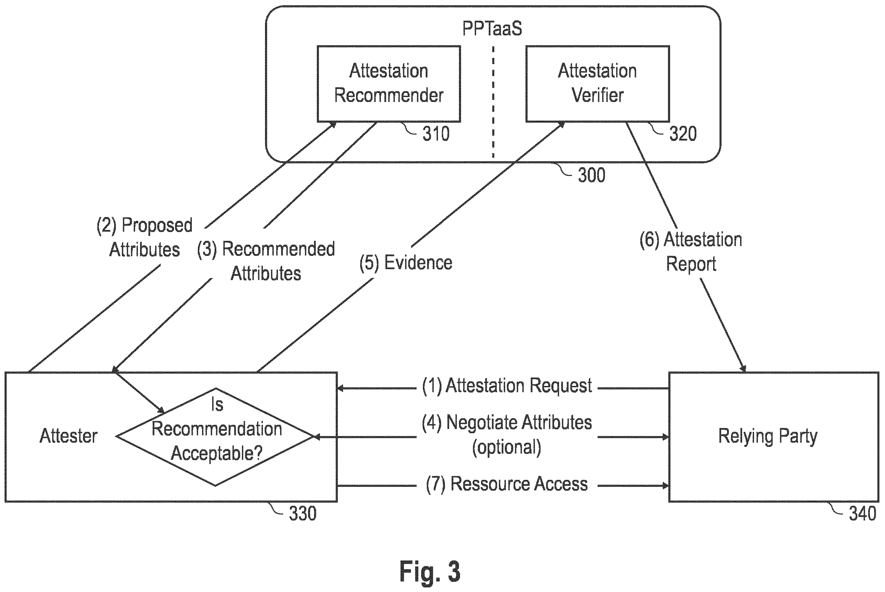

While Figs. 1a and 1b relate to the attestation recommendation service and the attestation verification service, Figs. 2a and 2b relate to the entity using the respective services, i.e., the requester, also denoted attester in connection with Figs. 3 and 4. The attester provides information on the first proposed set of attributes to be used for attestation to the attestation recommendation service 101. As outlined in connection with Figs. 1a and 1b, the first proposed set of attributes may be the entirety of the attributes available at the requester. Alternatively, the first proposed set of attributes may be attributes proposed by the relying party triggering the attestation. If available, the information on the first proposed set of attributes may include, for at least a subset of the attributes, information on a privacy impact (e.g., population size) of the respective attribute. In some cases, the requester may further provide information on a desired privacy score to the attestation recommendation service. Additionally, or alternatively, the requester may provide information on one or more attributes that have been previously disclosed, by the requester, to the relying party 50, e.g., during previous attestation processes.

The attestation recommendation service then uses this information and revises the proposal (if necessary) to provide the second proposed set of attributes, which are subsequently obtained, by the requester, from the attestation recommendation service. In a straightforward implementation, the requester may now provide the second proposed set of attributes to the attestation verification service 102, to perform attestation towards the relying party 50.

If the relying party is not content with the attributes being used for attestation, it can refuse the attestation. Therefore, it may be useful for the requester to communicate with the relying party to make sure the relying party accepts the second proposed set of attributes as evidence for the purpose of attestation. The second proposed set of attributes may then be provided if the second proposed set of attributes is acceptable to the requester. To make sure, the processor circuitry may provide a proposal related to the second proposed set of attributes to the relying party, obtain a response from the relying party, the response indicating whether the relying party accepts the second proposed set of attributes for the purpose of attestation. Accordingly, the method may comprise providing 230 the proposal related to the second proposed set of attributes to the relying party and obtaining 232 the response from the relying party. The second proposed set of attributes may then be provided if the response indicates that the relying party accepts the second proposed set of attributes for the purpose of attestation. Otherwise, the requester and the relying party may negotiate the features being used for the purpose of attestation. In other words, the processor circuitry may negotiate a set of attributes with the relying party if the response indicates that the relying party does not accept the second proposed set of attributes for the purpose of attestation.

The interface circuitry 22 or means for communicating 22 may correspond to one or more inputs and/or outputs for receiving and/or transmitting information, which may be in digital (bit) values according to a specified code, within a module, between modules or between modules of different entities. For example, the interface circuitry 22 or means for communicating 22 may comprise circuitry configured to receive and/or transmit information.

For example, the processor circuitry 24 or means for processing 24 may be implemented using one or more processing units, one or more processing devices, any means for processing, such as a processor, a computer or a programmable hardware component being operable with accordingly adapted software. In other words, the described function of the processor circuitry 24 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 26 or means for storing information 26 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the apparatus 20, device 20, computer system 200, method and computer program are mentioned in connection with the proposed concept, or one or more examples described above or below (e.g., Fig. 1a to 1b, 3 to 4). The apparatus 20, device 20, computer system 200, method and computer program may comprise one or more additional optional features corresponding to one or more aspects of the proposed concept, or one or more examples described above or below.

### Various examples of the present disclosure relate to an attestation service with differential privacy analysis (DPA)

The industry trend toward Zero Trust Architecture (ZTA) signals the desire for privacy protection mechanisms that are zero-trust-aware (for example, a relying party or attestation service could query a user device for evidence without the user knowing). This means the entity disclosing evidence attributes may monitor and evaluate attribute disclosures to determine if the sum of disclosed attributes is privacy preserving. DPA can be used by the disclosing entity to determine the entity's "privacy posture". A privacy posture score (PPS) can be used to set a threshold for determining which combination of trustworthiness attributes will be privacy revealing, according to the PPS threshold policy, and therefore may be withheld from an attestation evidence response. The proposed technique provides additional features for a Privacy Preserving Zero-Trust Architecture (PPZTA) that helps balance the negative effects of ZTA on privacy.

In the proposed concept, an Attestation Service with DPA (a.k.a., Privacy Protected Trust as a Service - PPTaaS) offloads the DPA processing from the user's computer (i.e., the requester) enabling greater scalability across a variety of platforms. The PPTaaS service, shown in Fig. 3, and provided as attestation recommendation service and optional attestation verification service by the computer system 100 in Fig. 1a, makes recommendations as to which attestation attributes are safe to disclose to an attestation requester (a.k.a., the Relying Party - RP). The PPTaaS may, for example, use generative AI to build a DPA model that is tailored to a specific user but is also trained using a broad spectrum of attestation attributes obtained from manufacturers, supply chain entities, users, and attestation evidence. Industry standard attestation such as CoRIM (Concise Reference Integrity Manifest) and C2PA (Concise Reference Integrity Manifest) define schemas for metadata that describe trustworthiness attributes of both systems and data. However, these schemas do not describe the privacy revealing properties of the metadata attributes. In many cases, these attributes have well-known privacy properties. For example, a device manufacturer may produce 1M instances of a device model, but attestation manifest schemas do not include device population metrics (i.e., the number of instances produced). Minor changes to these schemas may permit their inclusion enabling ground truth input to a DPA engine. Additionally, there are AI techniques for inferring population such as Leave One Out (LOO) which considers delta to training when a training artifact is omitted. Over a series of iterations, the data scientist can identify most/least impactful artifacts and compare them to known populations. Armed with population information for a given artifact, the DPA engine can build a model that predicts privacy safety for a given artifact or the privacy effect given artifact combinatorics.

The proposed technique may improve the adoption of Zero-trust architectures. Zero-trust architectures, while promising to improve security, also tilt the privacy scale creating a digital world that is even less accommodating of privacy. More than 79% of countries globally have some form of privacy legislation that may limit ZTA adoption without new privacy innovation. The proposed technique may further improve the building of trust as a service (TaaS) capabilities by providing a service offering that addresses both security and privacy protection goals of the various participants of a ZTA exchange. In cases where the participants security and privacy goals are contradictory, the best possible trade-off can be arrived at using DPA techniques and negotiated attestation attributes. The proposed technique may further support Cloud and Edge computing paradigms that fast becoming the primary vehicle for user access, not only to computing, but to AI intelligence. These infrastructures may accommodate and balance security and privacy needs as everyone has both security and privacy self-interest that may result in conflicting goals computationally. The proposed technique provides a service based on DPA that offers stochastic assessment of privacy risk applied at a timely point when privacy relevant disclosure is a condition of compute access.

The proposed technique may be implemented by an Attestation Recommender engine that may be deployed in a Cloud / Edge attestation service (e.g., Trust as a Service - TaaS) that is augmented with privacy preserving capabilities (e.g., PPTaaS). The recommender accepts proposed attestation evidence that contains data population artifacts (probability information that the evidence claim is not privacy preserving). The recommender engine may either accept the proposal or suggests a variation that preserves privacy while also satisfying the attestation request. The protocol being used may include attestation evidence metadata containing population artifacts, DPA models and recommendation inspection that categorize attributes according to privacy relevance.

Fig. 3 shows a schematic diagram of a Privacy Protected Trust as a Service architecture. The PPTaaS architecture may comprise a PPTaaS service provider 300 that contains an Attestation Recommender engine 310 and a traditional Attestation Verifier engine 320. The Attester 330 and Relying Party 340 roles are as described by RFC9334 with the exception that the Attester 330 role consults the Attestation Recommender 310 prior to completing a traditional attestation evidence exchange with a traditional Verifier 320. The attestation is triggered by an Attestation Request (1) by the relying party 340. The Attester 330 then provides Proposed Attributes (2) to the Attestation Recommender 310. The Attestation Recommender 310 analyzes the Proposed Attributes (the first proposed set of attributes) to determine the privacy impact in terms of their DPA characteristics. Based on the Attester's privacy profile, a subset of attributes or an aggregation of attributes is recommended (as second proposed set of attributes) and provided to the Attester as Recommended Attributes (3). The Attester may negotiate (4) the use of recommended attributes or simply obtain an Attestation Result (by providing the Evidence (5) to the Attestation Verifier 320, and the Attestation Verifier providing an Attestation Report (6) to the Relying Party 340) based on the recommendation. The Relying Party 340 accepts or rejects the privacy protected Attestation Results based on the Recommended / negotiated Attributes and the relying party's security policy that evaluates impact to security given the suggested or negotiated recommendation. Once the Relying Party has accepted, the Attester 330 can access the resources (7) of the Relying Party 340.

This approach ensures the Attester's privacy policy is satisfied before the attributes are disclosed to the Relying Party. If attributes containing unfavorable privacy properties are disclosed prematurely, privacy may be compromised. If the Recommended Attributes are insufficient to satisfy the Relying Party's (RP) security policy, the RP may refuse continued interaction with the Attester. This may imply RP provided service denials, but that is a reasonable trade-off given the privacy objective. Privacy legislation may evolve to set limits on Relying Parties from requiring disclosure of privacy revealing attributes as a condition of providing critical services that are in the best interest of the population such has access to emergency service, food, housing, and health. The proposed concept provides a cloud / edge framework for balancing the security and privacy trade-offs.

Note that the PPTaaS server bifurcates the Attestation Recommendation engine 310 from the Attestation Verifier engine 320. A real-world deployment may create a firewall between the two engines to further ensure the privacy self-interest of the Attester is not easily compromised given the security self-interest of the Relying Party.

Fig. 4 shows a flow chart of an example flow of the Attestation Recommender. The Attestation workflow may involve the supply chain where suppliers (shown as supply chain entities 410) identify attestation attributes that have trust relevance. These attributes have two forms, (a) reference values, and (b) endorsed values. Reference values are matched with attestation evidence, while endorsed values are attributes about an attester that are unconditional. The reference values and endorsed values are provided to a database 420 of supply chain attributes (such as the Supply Chain Integrity, Transparency, and Trust database, SCITT).

As part of the Attestation Recommender 430, the following components are shown - a stochastic classifier 432, an LOO classifier 434 (Leave-One-Out classifier), a trained PPT model 436, and an attribute recommender 438, which communicates with the Attester 440.

In the following, examples are given with respect to the stochastic classifier. The supply chain entities normally exclude population information about the components they produce. However, this information can easily be added using standard CoRIM schema extensions. For example, the CoRIM schema can be extended as follows:

```
        $$measurement-values-map-extension //= (
          & (population: -1) => uint
        )
```

The target environment described by CoRIM environment-map has a population defined by the population value. This value is ground truth for a training the Stochastic Classifier that associates population information with various hardware and software components that are manufactured. Updates to the Supply Chain Attributes database (SCADB) may incorporate updated population information that invokes retraining. The industry is already designing this infrastructure called SCITT. Note that population information for software is more challenging to control since software is easily replicated. However, given software is treated like other forms of controlled content (e.g., music, movies, pictures); digital rights management (DRM) technology can be applied to software that controls its distribution. Content distribution controllers become yet another form of supply chain entity that can contribute to a Supply Chain Attributes database.

Some attributes have uniqueness properties that are controlled by registry services. For example, IANA IPv4 (Internet Assigned Numbers Authority Internet Protocol version 4) address registry assigns IPv4 addresses. The population of assigned IPv4 addresses may be contributed to the SCADB. If IP addresses are used with attestation, the population size can be contributed to the database.

For example, attributes can be extended by CoRIM to include population metadata, such as:
ip4-addr-type = [ bytes size 4, population : uint ]
or a new endorsement measurement type can be defined that describes the attribute class such as:

```
        $$measurement-values-map-extension //= (
            ip4-addr-pop = uint
        )
```

By incorporating registries into the supply chain, they can contribute population information to the SCADB as well. Other attributes may apply a different strategy that may be specific to the type of attribute.

In the following, examples are given with respect to the LOO Classifier. The LOO Classifier is used to control for non-stochastic populations. The LOO Classifier may use Shapely values to find artifacts that are strong indicators of membership in a class. An iterative approach may select a set of artifacts and trains the set leaving one artifact out, for each artifact in the set. Then it may compare results to find the artifacts that are strong vs. weak indicators of membership. Artifacts that are weak indicators are more favorable for use as privacy preserving attestation attributes. The LOO Classifier may operate in the background to classify attributes across a spectrum of privacy preservation properties. This is well suited for SCITT databases where the industry has agreed to contribute large data sets that are available for long periods of time.

In the following, examples are given with respect to the attribute recommender. The Stochastic and LOO classifiers train a model that is used by a recommendation engine, Attribute Recommender, that accepts a set of attributes from an attester that may satisfy an attestation request. Then the attribute recommender evaluates the attributes' privacy preserving / revealing characteristics based on the PPT Model (see Fig. 4). The recommendation engine may provide feedback for discrete attributes as well as for the collection.

The Attester may maintain an overall privacy "score" by keeping track of each attribute disclosed, supplied to the Attribute Recommender which returns a value consistent with the spectrum of trained attributes. The position within the spectrum is the score.

The recommendation may further accept a target privacy score that defines a target value on the privacy spectrum as a goal for the recommendation engine to find a set of attributes or identifies a suitable source of noise to mix with the attributes to satisfy the privacy goal.

For example, given an IPv4 address use case, if the Relying Party (see Fig. 3) requests the IP address in attestation evidence, and the Recommendation Engine returns a score that is high (privacy revealing) on the spectrum, The Recommendation Engine may offer an alternative IP address that masks the lower half of the IPv4 address space (e.g., 192.168.0.0 + mask: 255.255.0.0) or may recommend using a different attribute (e.g., IPv6 address + mask).

The proposed concept may be integrated with an attestation verifier service or be provided a stand-alone recommender service.

The Attribute Recommender may suggest an alternate attribute that is an amalgamation of several attributes where the amalgamated attribute has a population that is the sum of the discrete attributes. This can be achieved by hashing the attributes where the resulting digest is the new attribute. For example, given three attributes (A1, A2, A3), each having a population (A1=50, A2=90, A3=20) respectively. The individual probabilities are (A1=0.02, A2=0.012, A3=0.05). The Attribute Recommender can combine the populations of each attribute to create a new attribute A4. The population of A4 is 90,000 and the probability of collision is 1 in 90,000 or P(A1, A2, A3) = P(A1) * P(A2) * P(A3) = (0.02 * 0.012 * 0.05) = 0.000012. If the attributes (A1, A2, A3) are correlated, the probability equation P(A1) x P(A2|A1), P(A1) x P(A3|A1). The Attribute Recommender may rely on the classifiers for insight as to whether a given attribute is correlated with other attributes.

More details and aspects of the attestation service with differential privacy analysis are mentioned in connection with the proposed concept or one or more examples described above or below (e.g., Fig. 1a to 2b). The attestation service with differential privacy analysis may comprise one or more additional optional features corresponding to one or more aspects of the proposed concept, or one or more examples described above or below.

The aspects and features described in relation to a particular one of the previous examples may also be combined with one or more of the further examples to replace an identical or similar feature of that further example or to additionally introduce the features into the further example.

In the following, some examples of the proposed concept are presented:
An example (e.g., example 1) relates to an apparatus (10) comprising interface circuitry (12), machine-readable instructions, and processor circuitry (14) to execute the machine-readable instructions to provide an attestation recommendation service (101), by obtaining, from a requester (200), information on a first proposed set of attributes to be used for attestation of the requester by an attestation verification service (102), determining, based on the information on the first proposed set of attributes and based on a desired privacy score of the requester, a second proposed set of attributes to be used for the attestation, and providing information to the requester (200), the information comprising the second proposed set of attributes.

Another example (e.g., example 2) relates to a previous example (e.g., example 1) or to any other example, further comprising that the processor circuitry is to execute the machine-readable instructions to obtain information on the desired privacy score of the requester from the requester.

Another example (e.g., example 3) relates to a previous example (e.g., one of the examples 1 or 2) or to any other example, further comprising that the processor circuitry is to execute the machine-readable instructions to obtain information on one or more attributes that have been previously disclosed to a relying party, with the attestation being performed towards the relying party, and to determine the second proposed set of attributes further based on the information on the one or more attributes that have been previously disclosed to the relying party.

Another example (e.g., example 4) relates to a previous example (e.g., example 3) or to any other example, further comprising that the processor circuitry is to execute the machine-readable instructions to adjust a privacy score of the second proposed set of attributes or the desired privacy score based on the information on the one or more attributes that have been previously disclosed to a relying party.

Another example (e.g., example 5) relates to a previous example (e.g., one of the examples 1 to 4) or to any other example, further comprising that the processor circuitry is to execute the machine-readable instructions to determine the second proposed set of attributes based on a repository of attributes having trust relevance, the repository comprising information on a privacy impact of the attributes having trust relevance.

Another example (e.g., example 6) relates to a previous example (e.g., example 5) or to any other example, further comprising that the processor circuitry is to execute the machine-readable instructions to determine the second proposed set of attributes based on at least one of an output of a stochastic classifier and an output of a Leave-One-Out (LOO) classifier, with the output of the stochastic classifier and of the LOO classifier being based on the repository of attributes having trust relevance.

Another example (e.g., example 7) relates to a previous example (e.g., example 6) or to any other example, further comprising that the stochastic classifier and the LOO classifier take the attributes of the first set of attributes as input.

Another example (e.g., example 8) relates to a previous example (e.g., one of the examples 6 or 7) or to any other example, further comprising that the stochastic classifier and/or the LOO classifier are trained based on the repository of attributes having trust relevance.

Another example (e.g., example 9) relates to a previous example (e.g., one of the examples 6 to 8) or to any other example, further comprising that the processor circuitry is to execute the machine-readable instructions to determine the second proposed set of attributes based on an output of a machine-learning model being trained to output, based on at least one of the output of the stochastic classifier and the output of the LOO classifier, information on an estimated privacy impact of the attributes of the first proposed set of attributes.

Another example (e.g., example 10) relates to a previous example (e.g., one of the examples 1 to 9) or to any other example, further comprising that the processor circuitry is to execute the machine-readable instructions to select a subset of attributes of the first proposed set of attributes for the second proposed set of attributes when determining the second proposed set of attributes.

Another example (e.g., example 11) relates to a previous example (e.g., one of the examples 1 to 10) or to any other example, further comprising that the processor circuitry is to execute the machine-readable instructions to propose an amalgamation, blinding, substitution, cryptographic hash, reduction in resolution, homomorphic encryption, zero-knowledge proof of knowledge proof, or other transform of multiple attributes of the first proposed set of attributes for the second proposed set of attributes when determining the second proposed set of attributes such that the respective attribute or attributes of the second proposed set of attributes cannot be linked to the attribute or attributes of the first set of attributes they are based on or other identifying attributes about the requestor device or its operators.

Another example (e.g., example 12) relates to a previous example (e.g., one of the examples 1 to 11) or to any other example, further comprising that the processor circuitry is to execute the machine-readable instructions to provide the attestation verification service, by obtaining the second proposed set of attributes from the requester and providing an attestation result to a relying party based on the second proposed set of attributes.

An example (e.g., example 13) relates to an apparatus (20) for a requester (200), the apparatus comprising interface circuitry (22), machine-readable instructions, and processor circuitry (24) to execute the machine-readable instructions to provide information on a first proposed set of attributes to be used for attestation to an attestation recommendation service (101), obtain information on the second proposed set of attributes from the attestation recommendation service, and provide the second proposed set of attributes to an attestation verification service (102), to perform attestation towards a relying party.

Another example (e.g., example 14) relates to a previous example (e.g., example 13) or to any other example, further comprising that the processor circuitry is to execute the machine-readable instructions to provide the second proposed set of attributes if the second proposed set of attributes is acceptable to the requester.

Another example (e.g., example 15) relates to a previous example (e.g., one of the examples 13 or 14) or to any other example, further comprising that the processor circuitry is to execute the machine-readable instructions to provide a proposal related to the second proposed set of attributes to the relying party, obtain a response from the relying party, the response indicating whether the relying party accepts the second proposed set of attributes for the purpose of attestation, and provide the second proposed set of attributes if the response indicates that the relying party accepts the second proposed set of attributes for the purpose of attestation.

Another example (e.g., example 16) relates to a previous example (e.g., example 15) or to any other example, further comprising that the processor circuitry is to execute the machine-readable instructions to negotiate a set of attributes with the relying party if the response indicates that the relying party does not accept the second proposed set of attributes for the purpose of attestation.

An example (e.g., example 17) relates to an apparatus (10) comprising processor circuitry (14) configured to provide an attestation recommendation service (101), by obtaining, from a requester (200), information on a first proposed set of attributes to be used for attestation of the requester by an attestation verification service (102), determining, based on the information on the first proposed set of attributes and based on a desired privacy score of the requester, a second proposed set of attributes to be used for the attestation, and providing information to the requester (200), the information comprising the second proposed set of attributes.

An example (e.g., example 18) relates to an apparatus (20) for a requester (200), the apparatus comprising processor circuitry (24) configured to provide information on a first proposed set of attributes to be used for attestation to an attestation recommendation service (101), obtain information on the second proposed set of attributes from the attestation recommendation service, and provide the second proposed set of attributes to an attestation verification service (102), to perform attestation towards a relying party.

An example (e.g., example 19) relates to a device (10) comprising means for processing (14) for providing an attestation recommendation service (101), by obtaining, from a requester (200), information on a first proposed set of attributes to be used for attestation of the requester by an attestation verification service (102), determining, based on the information on the first proposed set of attributes and based on a desired privacy score of the requester, a second proposed set of attributes to be used for the attestation, and providing information to the requester (200), the information comprising the second proposed set of attributes.

An example (e.g., example 20) relates to a device (20) for a requester (200), the device comprising means for processing (24) for providing information on a first proposed set of attributes to be used for attestation to an attestation recommendation service (101), obtaining information on the second proposed set of attributes from the attestation recommendation service, and providing the second proposed set of attributes to an attestation verification service (102), to perform attestation towards a relying party.

Another example (e.g., example 21) relates to an attestation recommendation server (100) comprising the apparatus (10) or device (10) according to one of the examples 1 to 12, 17 or 19 (or according to any other example).

Another example (e.g., example 22) relates to a requester device (200) comprising the apparatus (20) or device (20) according to one of the examples 13 to 16, 18 or 20 (or according to any other example).

An example (e.g., example 23) relates to a method for providing an attestation recommendation service, the method comprising obtaining (110), from a requester (200), information on a first proposed set of attributes to be used for attestation of the requester by an attestation verification service, determining (120), based on the information on the first proposed set of attributes and based on a desired privacy score of the requester, a second proposed set of attributes to be used for the attestation, and providing (130) information to the requester (200), the information comprising the second proposed set of attributes.

Another example (e.g., example 24) relates to a previous example (e.g., example 23) or to any other example, further comprising that the method comprises obtaining (112) information on the desired privacy score of the requester from the requester.

Another example (e.g., example 25) relates to a previous example (e.g., one of the examples 23 or 24) or to any other example, further comprising that the method comprises obtaining (114) information on one or more attributes that have been previously disclosed to a relying party, with the attestation being performed towards the relying party, and determining (120) the second proposed set of attributes further based on the information on the one or more attributes that have been previously disclosed to the relying party.

Another example (e.g., example 26) relates to a previous example (e.g., example 25) or to any other example, further comprising that the method comprises adjusting (116) a privacy score of the second proposed set of attributes or the desired privacy score based on the information on the one or more attributes that have been previously disclosed to a relying party.

Another example (e.g., example 27) relates to a previous example (e.g., one of the examples 23 to 26) or to any other example, further comprising that the method comprises determining (120) the second proposed set of attributes based on a repository of attributes having trust relevance, the repository comprising information on a privacy impact of the attributes having trust relevance.

Another example (e.g., example 28) relates to a previous example (e.g., example 27) or to any other example, further comprising that the method comprises determining (120) the second proposed set of attributes based on at least one of an output of a stochastic classifier and an output of a Leave-One-Out (LOO) classifier, with the output of the stochastic classifier and of the LOO classifier being based on the repository of attributes having trust relevance.

Another example (e.g., example 29) relates to a previous example (e.g., example 28) or to any other example, further comprising that the stochastic classifier and the LOO classifier take the attributes of the first set of attributes as input.

Another example (e.g., example 30) relates to a previous example (e.g., one of the examples 28 or 29) or to any other example, further comprising that the stochastic classifier and/or the LOO classifier are trained based on the repository of attributes having trust relevance.

Another example (e.g., example 31) relates to a previous example (e.g., one of the examples 28 to 30) or to any other example, further comprising that the method comprises determining (120) the second proposed set of attributes based on an output of a machine-learning model being trained to output, based on at least one of the output of the stochastic classifier and the output of the LOO classifier, information on an estimated privacy impact of the attributes of the first proposed set of attributes.

Another example (e.g., example 32) relates to a previous example (e.g., one of the examples 23 to 31) or to any other example, further comprising that the method comprises selecting (122) a subset of attributes of the first proposed set of attributes for the second proposed set of attributes when determining the second proposed set of attributes.

Another example (e.g., example 33) relates to a previous example (e.g., one of the examples 23 to 32) or to any other example, further comprising that the method comprises proposing (124) an amalgamation, blinding, substitution, cryptographic hash, reduction in resolution, homomorphic encryption, zero-knowledge proof of knowledge proof, or other transform of multiple attributes of the first proposed set of attributes for the second proposed set of attributes when determining the second proposed set of attributes such that the respective attribute or attributes of the second proposed set of attributes cannot be linked to the attribute or attributes of the first set of attributes they are based on or other identifying attributes about the requestor device or its operators.

Another example (e.g., example 34) relates to a previous example (e.g., one of the examples 23 to 33) or to any other example, further comprising that the method comprises providing (140) the attestation verification service, by obtaining the second proposed set of attributes from the requester, and providing an attestation result to a relying party based on the second proposed set of attributes.

An example (e.g., example 35) relates to a method for a requester (200), the method comprising providing (210) information on a first proposed set of attributes to be used for attestation to an attestation recommendation service (101), obtaining (220) information on the second proposed set of attributes from the attestation recommendation service, and providing (240) the second proposed set of attributes to an attestation verification service, to perform attestation towards a relying party.

Another example (e.g., example 36) relates to a previous example (e.g., example 35) or to any other example, further comprising that the method comprises providing (240) the second proposed set of attributes if the second proposed set of attributes is acceptable to the requester.

Another example (e.g., example 37) relates to a previous example (e.g., one of the examples 35 or 36) or to any other example, further comprising that the method comprises providing (230) a proposal related to the second proposed set of attributes to the relying party, obtaining (232) a response from the relying party, the response indicating whether the relying party accepts the second proposed set of attributes for the purpose of attestation, and providing (240) the second proposed set of attributes if the response indicates that the relying party accepts the second proposed set of attributes for the purpose of attestation.

Another example (e.g., example 38) relates to a previous example (e.g., example 37) or to any other example, further comprising that the method comprises negotiating (234) a set of attributes with the relying party if the response indicates that the relying party does not accept the second proposed set of attributes for the purpose of attestation.

Another example (e.g., example 39) relates to a non-transitory, computer-readable medium comprising a program code that, when the program code is executed on a processor, a computer, or a programmable hardware component, causes the processor, computer, or programmable hardware component to perform at least one of the method of one of the examples 23 to 34 (or according to any other example) and the method of one of the examples 35 to 38 (or according to any other example).

Another example (e.g., example 40) relates to a non-transitory machine-readable storage medium including program code, when executed, to cause a machine to perform at least one of the method of one of the examples 23 to 34 (or according to any other example) and the method of one of the examples 35 to 38 (or according to any other example).

Another example (e.g., example 41) relates to a computer program having a program code for performing at least one of the method of one of the examples 23 to 34 (or according to any other example) and the method of one of the examples 35 to 38 (or according to any other example) when the computer program is executed on a computer, a processor, or a programmable hardware component.

Another example (e.g., example 42) relates to a machine-readable storage including machine readable instructions, when executed, to implement a method or realize an apparatus as claimed in any pending claim (or shown in any example).

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus comprising processor circuitry configured to:
provide an attestation recommendation service, by:
obtaining, from a requester, information on a first proposed set of attributes to be used for attestation of the requester by an attestation verification service;
determining, based on the information on the first proposed set of attributes and based on a desired privacy score of the requester, a second proposed set of attributes to be used for the attestation; and
providing information to the requester, the information comprising the second proposed set of attributes.

2. The apparatus according to claim 1, wherein the processor circuitry is to execute the machine-readable instructions to obtain information on the desired privacy score of the requester from the requester.

3. The apparatus according to one of the previous claims, wherein the processor circuitry is to execute the machine-readable instructions to obtain information on one or more attributes that have been previously disclosed to a relying party, with the attestation being performed towards the relying party, and to determine the second proposed set of attributes further based on the information on the one or more attributes that have been previously disclosed to the relying party.

4. The apparatus according to claim 3, wherein the processor circuitry is to execute the machine-readable instructions to adjust a privacy score of the second proposed set of attributes or the desired privacy score based on the information on the one or more attributes that have been previously disclosed to a relying party.

5. The apparatus according to one of the previous claims, wherein the processor circuitry is to execute the machine-readable instructions to determine the second proposed set of attributes based on a repository of attributes having trust relevance, the repository comprising information on a privacy impact of the attributes having trust relevance.

6. The apparatus according to claim 5, wherein the processor circuitry is to execute the machine-readable instructions to determine the second proposed set of attributes based on at least one of an output of a stochastic classifier and an output of a Leave-One-Out (LOO) classifier, with the output of the stochastic classifier and of the LOO classifier being based on the repository of attributes having trust relevance.

7. The apparatus according to claim 6, wherein the stochastic classifier and the LOO classifier take the attributes of the first set of attributes as input.

8. The apparatus according to claim 6 or 7, wherein the stochastic classifier and/or the LOO classifier are trained based on the repository of attributes having trust relevance.

9. The apparatus according to claim 6, 7 or 8, wherein the processor circuitry is to execute the machine-readable instructions to determine the second proposed set of attributes based on an output of a machine-learning model being trained to output, based on at least one of the output of the stochastic classifier and the output of the LOO classifier, information on an estimated privacy impact of the attributes of the first proposed set of attributes.

10. The apparatus according to one of the previous claims, wherein the processor circuitry is to execute the machine-readable instructions to select a subset of attributes of the first proposed set of attributes for the second proposed set of attributes when determining the second proposed set of attributes.

11. The apparatus according to one of the previous claims, wherein the processor circuitry is to execute the machine-readable instructions to propose an amalgamation, blinding, substitution, cryptographic hash, reduction in resolution, homomorphic encryption, zero-knowledge proof of knowledge proof, or other transform of multiple attributes of the first proposed set of attributes for the second proposed set of attributes when determining the second proposed set of attributes such that the respective attribute or attributes of the second proposed set of attributes cannot be linked to the attribute or attributes of the first set of attributes they are based on or other identifying attributes about the requestor device or its operators.

12. The apparatus according to one of the previous claims, wherein the processor circuitry is to execute the machine-readable instructions to provide the attestation verification service, by obtaining the second proposed set of attributes from the requester and providing an attestation result to a relying party based on the second proposed set of attributes.

13. An apparatus for a requester, the apparatus comprising processor circuitry configured to:
provide information on a first proposed set of attributes to be used for attestation to an attestation recommendation service;
obtain information on the second proposed set of attributes from the attestation recommendation service; and
provide the second proposed set of attributes to an attestation verification service, to perform attestation towards a relying party.

14. A method for providing an attestation recommendation service, the method comprising:
obtaining, from a requester, information on a first proposed set of attributes to be used for attestation of the requester by an attestation verification service;
determining, based on the information on the first proposed set of attributes and based on a desired privacy score of the requester, a second proposed set of attributes to be used for the attestation; and
providing information to the requester, the information comprising the second proposed set of attributes.

15. A non-transitory, computer-readable medium comprising a program code that, when the program code is executed on a processor, a computer, or a programmable hardware component, causes the processor, computer, or programmable hardware component to perform the method of claim 14.
